# FASCICULE DE BREVET EUROPEEN

(11) **EP 1 902 953 B1**
(45) Date de publication et mention de la délivrance du brevet: **27.06.2018**
(21) Numéro de dépôt: 07115944.6
(22) Date de dépôt: 07.09.2007
(51) Int. Cl.: B64C 27/14, F04D 29/66, B64D 33/02, F02C 7/045, F02C 7/055, F04D 29/42

(54) **MOTEUR D'HELICOPTERE A TURBINE A GAZ AYANT UN DISPOSITIF D'INSONORISATION**
GASTURBINENMOTOR EINES HUBSCHRAUBERS MIT EINER VORRICHTUNG ZUR SCHALLDÄMPFUNG
GAS TURINE HELICOPTER ENGINE HAVING A SOUND ABSORBING DEVICE

(30) Priorité: 20.09.2006 FR 0653835
(43) Date de publication de la demande: 26.03.2008
(73) Titulaire: Safran Helicopter Engines, 64510 Bordes (FR)
(72) Inventeur: Baude, Pierre, 64800, Nay (FR)
(74) Mandataire: Boura, Olivier

(56) Documents cités:
- FR-A1- 2 210 724
- FR-A1- 2 250 671
- US-A- 4 421 455

## Description

### Arrière-plan de l'invention

La présente invention concerne la diminution de l'émission sonore des hélicoptères à moteur à turbine à gaz.

Des efforts ont été réalisés pour réduire le bruit causé par les pales de rotor principal d'hélicoptère de sorte que le bruit engendré par le moteur d'entraînement des pales peut constituer aujourd'hui une part significative de l'émission sonore d'un hélicoptère à moteur à turbine à gaz.

Le document US 4 421 455 divulgue un moteur à turbine à gaz, notamment pour générateur auxiliaire de puissance, ou APU ("Auxiliary Power Unit") dans lequel des revêtements formant atténuateurs acoustiques sont intégrés à certains endroits de parois d'un carter métallique définissant un passage d'alimentation en air d'un compresseur du moteur. Les revêtements représentent un encombrement non négligeable influençant le dimensionnement du moteur. En outre, le moteur, et notamment le carter métallique, doit être conçu à l'origine pour permettre le logement des atténuateurs acoustiques.

### Objet et résumé de l'invention

L'invention a pour but de fournir un moteur d'hélicoptère à turbine à gaz muni d'un dispositif d'insonorisation, conforme à la revendication 1, ne présentant pas de tels inconvénients. Ce but est atteint grâce à un dispositif d'insonorisation d'un moteur d'hélicoptère à turbine à gaz ayant un compresseur et un passage d'alimentation du compresseur en air s'ouvrant à son extrémité amont par une ouverture extérieure délimitée par un carter métallique du moteur, le dispositif d'insonorisation comprenant des lèvres d'entrée d'air qui définissent une entrée d'air pour le passage d'alimentation du compresseur en air, qui ont des extrémités internes pour leur raccordement au carter métallique du moteur le long de l'ouverture extérieure du passage et qui sont au moins en partie formées par un atténuateur acoustique propre à atténuer des fréquences sonores produites par la rotation du compresseur.

Le traitement d'insonorisation conforme à l'invention présente de multiples avantages. Son emplacement non éloigné de la roue du compresseur, principale source de bruit du moteur, lui confère une bonne efficacité. En outre, les lèvres d'entrée d'air étant situées du côté extérieur du moteur en étant montées sur le carter métallique, la présence d'un atténuateur acoustique ne pose pas de problème d'encombrement et ne nécessite pas de revoir la conception du moteur, et le traitement d'insonorisation est aisément applicable à des moteurs existants. De plus, les lèvres avec atténuateur acoustique peuvent être réalisées en matériau léger, tel qu'un matériau composite du type fibres-résine de sorte que l'ajout de l'atténuateur acoustique ne se traduit pas par une augmentation de masse importante. Par ailleurs, avec cette disposition, la possibilité de recouvrir l'entrée d'air radiale par une grille anti-givrage est conservée.

On notera aussi qu'une atténuation efficace du bruit causé par la rotation des pales permet de concevoir celles-ci dans le but d'optimiser le comportement aérodynamique sans se préoccuper des conséquences sur l'acoustique.

Selon un mode de réalisation particulier, le dispositif d'insonorisation comprend en outre un atténuateur acoustique formant une paroi du passage d'alimentation du compresseur en air sur une partie de la longueur de ce passage à partir de son ouverture extérieure.

L'atténuation acoustique peut être par exemple un revêtement de paroi du type résonateur de Helmholtz, ou de tout autre type connu.

### Brève description des dessins

L'invention sera mieux comprise à la lecture de la description faite ci-après, à titre indicatif mais non limitatif, en référence aux dessins annexés sur lesquels :
- la figure 1 est une vue très schématique d'un moteur d'hélicoptère à turbine à gaz ;
- la figure 2 est une vue partielle en demi-coupe à échelle agrandie montrant l'intégration d'un atténuateur acoustique aux lèvres de l'entrée d'air radiale pour le compresseur du moteur de la figure 1 ; et
- la figure 3 est une vue partielle en demi-coupe à échelle agrandie montrant l'intégration d'atténuateurs acoustiques aux lèvres d'entrée d'air radiale et au carter du passage d'alimentation en air du compresseur de la figure 1.

### Description détaillée de modes de réalisation

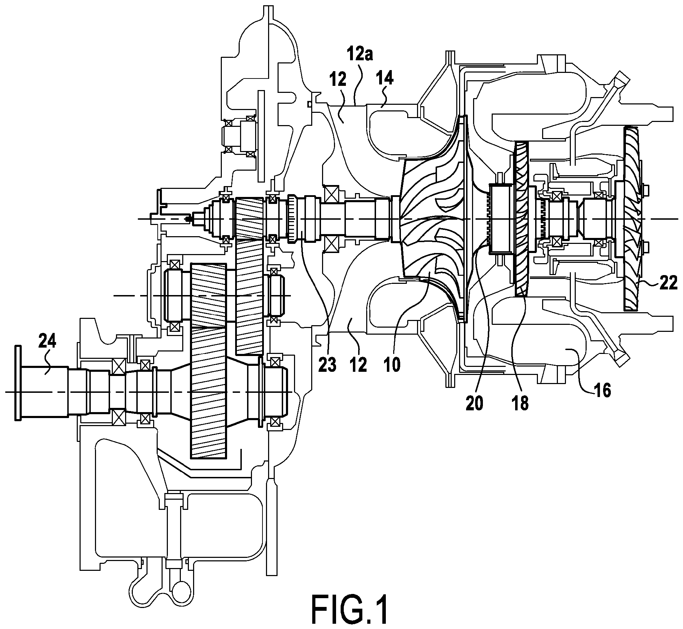

La figure 1 montre de façon schématique un moteur d'hélicoptère à turbine à gaz comprenant un étage de compresseur 10 (par exemple compresseur centrifuge) recevant de l'air extérieur par un passage annulaire 12 d'alimentation en air. A son extrémité amont, le passage 12 s'ouvre par une ouverture extérieure annulaire 12a délimitée par un carter métallique 14 du moteur. Le carter 14 définit aussi les parois du passage 12. Une chambre de combustion annulaire 16, par exemple à flux inversé, est munie d'injecteurs (non représentés) alimentés en carburant et en flux d'air primaire issu du compresseur 10. Les gaz de combustion issus de la chambre 16 entraînent une turbine 18 d'entraînement du compresseur 10, reliée à celui-ci par un arbre 20, et une turbine de puissance 22 (par exemple à un seul étage) reliée par un arbre 23 à un train d'engrenages qui fournit une puissance mécanique sur un arbre de sortie 24, les arbres 20 et 23 étant coaxiaux.

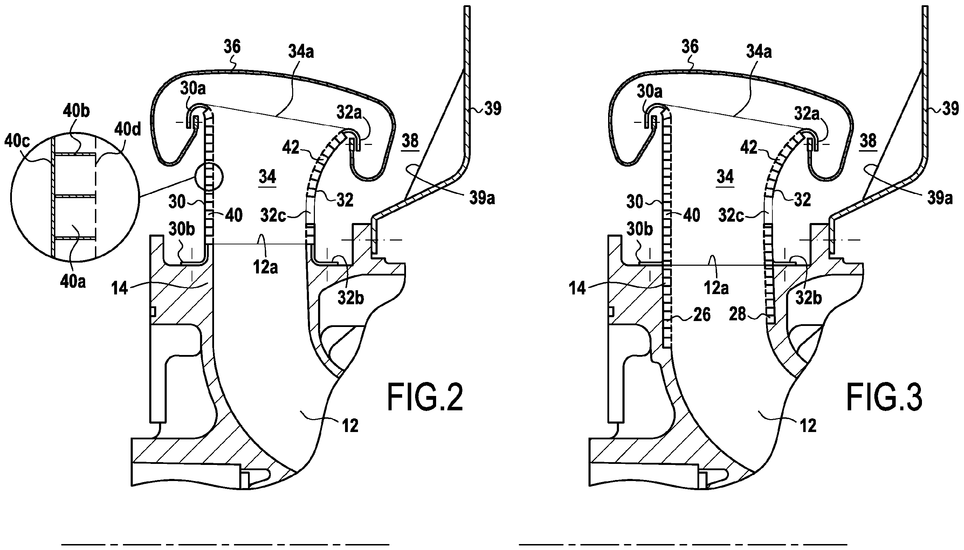

Comme le montre la figure 2, deux lèvres 30, 32 (non montrées sur la figure 1) définissent une entrée d'air 34 pour le passage 12. Les lèvres sont formées par deux pièces annulaires respectives qui, à une extrémité interne, se raccordent à l'extrémité amont du passage 12 de part et d'autre de l'ouverture 12a le long de celle-ci. A leur autre extrémité, ou extrémité externe, les lèvres présentent un rebord 30a, 32a recourbé en U vers l'extérieur. A leur extrémité interne, les lèvres 30, 32 peuvent présenter une collerette ou des pattes 30b, 32b permettant leur fixation sur le carter 14.

L'extrémité 34a de l'entrée d'air 34, définie par les rebords 30a, 32a, est couverte par une grille anti-givrage 36 aux rebords recourbés dont les extrémités s'engagent dans les creux des rebords 30a, 32a et sont fixées à ces derniers. La grille 36 a pour objet d'éviter la formation de givre dans l'entrée d'air 34 et le passage d'alimentation 12, un givrage éventuel se formant sur la surface extérieure de la grille 36. Un canal de contournement annulaire 38 est alors prévu pour alimenter suffisamment le passage 12 en air en dépit du givrage de la grille 36. Le canal 38 est délimité d'un côté par une paroi annulaire de guidage coudée 39, ou plénum, munie de nervures de rigidification 39a et solidaire du carter 14. La paroi 39 est située en regard d'une lèvre de l'entrée d'air, par exemple la lèvre 32, qui délimite l'autre côté du canal 38 et qui présente des ouvertures ou lumières 32c pour le passage de l'air provenant du canal 38. Une structure d'entrée d'air telle que décrite ci-avant est bien connue en soi.

Les lèvres 30, 32 ont leur paroi formant un atténuateur acoustique, respectivement 40, 42, au moins sur une partie de leur dimension radiale définissant l'entrée d'air 34 depuis le raccordement au passage d'alimentation 12, de préférence sur toute la dimension radiale de l'entrée d'air 34, afin d'atténuer le bruit engendré par la source sonore du moteur la plus proche, à savoir le compresseur. Chaque atténuateur acoustique peut être formé de plusieurs parties adjacentes si souhaitable pour plus de commodité de fabrication.

Comme le montre le détail de la figure 2, chaque atténuateur acoustique, par exemple 40, peut être formé par un ensemble de cavités ou cellules adjacentes 40a, séparées par des parois 40b, formant par exemple une structure en nid d'abeilles, les parois 40b s'étendant perpendiculairement à la surface de la lèvre entre un fond 40c formé par une plaque ou feuille rigide étanche (non traversée par les ondes sonores) et une face avant 40d formée par une plaque ou feuille laissant passer les ondes sonores. La plaque ou feuille avant 40d est par exemple perforée. On pourrait aussi utiliser une plaque ou feuille poreuse perméable aux ondes sonores à atténuer.

La profondeur des cavités 40a (distance entre le fond et la face avant) est choisie en fonction de la longueur d'onde des ondes sonores à atténuer. Ces dernières étant produites essentiellement par le compresseur 10, elles ont une fréquence de l'ordre de 5 à 14 kHz environ pour des moteurs d'hélicoptères à turbine à gaz courants, ce qui implique une profondeur de cavité (quart de la longueur d'onde) de 0,6 cm à 1,6 cm environ. Le logement de l'atténuateur acoustique ne pose aucun problème d'encombrement au niveau des lèvres d'entrée d'air. Avantageusement, la paroi des lèvres 30, 32 bordant l'entrée d'air 34 est constituée par l'atténuateur acoustique.

L'entrée d'air 34 étant située dans une zone "froide" du moteur et ne constituant pas une partie structurale du moteur, le matériau des lèvres 30, 32 munies des ou formant les atténuateurs acoustiques 40, 42 peut être choisi dans une large gamme de matériaux. On pourra en particulier réaliser les lèvres 30, 32 et atténuateurs acoustiques 40, 42 en un matériau composite à renfort fibreux, par exemple fibres de verre ou de carbone et matrice résine. Un tel matériau étant léger, la présence des atténuateurs acoustiques n'est pas pénalisante en terme de masse.

La paroi formant plénum 39 peut être réalisée dans le même matériau que les lèvres 30, 32 et également être munie d'un ou former un atténuateur acoustique semblable aux atténuateurs 30, 32.

Ainsi, une atténuation efficace du bruit engendré par le compresseur peut être obtenue de façon simple, sans souci d'encombrement et sans modification du moteur, y compris du passage d'alimentation en air, de sorte que l'invention peut être aisément appliquée à des moteurs existants.

Il est toutefois possible, comme le montre la figure 3, de prévoir des atténuateurs acoustiques 26, 28 aussi sur les parois du passage 12 d'alimentation en air, sur une partie de sa longueur à partir du raccordement avec l'entrée d'air 34. Les atténuateurs 26, 28 peuvent avoir la même structure que les atténuateurs 40, 42, et peuvent être réalisés dans le même matériau métallique que le carter 14 ou dans un matériau différent, par exemple en intégrant un atténuateur en céramique dans le carter métallique.

Dans ce qui précède, on a envisagé la réalisation d'atténuateurs acoustiques sous forme d'atténuateurs Helmholtz. Toutefois, d'autres structures d'atténuateur acoustique peuvent être utilisées, par exemple des mousses ou des matériaux poreux céramiques ou métalliques.

Dans la description détaillée qui précède, les lèvres d'entrée d'air s'étendent le long de l'ouverture annulaire 12a du passage d'alimentation en air sur toute la périphérie du moteur. L'invention est aussi applicable au cas où l'ouverture extérieure du passage d'alimentation en air s'étend sur une partie seulement de la périphérie du moteur, les lèvres d'entrée d'air avec atténuateur acoustique étant disposées le long de l'ouverture en étant raccordées à leurs extrémités.

## Revendications

1. Moteur d'hélicoptère à turbine à gaz muni d'un dispositif d'insonorisation, le moteur ayant un compresseur (10) et un passage (12) d'alimentation du compresseur en air s'ouvrant à son extrémité amont par une ouverture extérieure (12a) délimitée par un carter métallique (14) à la périphérie du moteur, **caractérisé en ce que** le dispositif d'insonorisation comprend des lèvres d'entrée d'air (30, 32) qui définissent à la périphérie du moteur une entrée d'air radiale (34) pour le passage (12) d'alimentation du compresseur en air, les lèvres d'entrée d'air (30, 32) ayant des extrémités internes pour leur raccordement au carter métallique (14) du moteur le long de l'ouverture extérieure (12a) du passage (12), et étant au moins en partie formées par un atténuateur acoustique (40, 42) propre à atténuer des fréquences sonores produites par la rotation du compresseur.

2. Moteur selon la revendication 1, dans lequel les lèvres (30, 32) du dispositif d'insonorisation sont en matériau composite à renfort fibreux densifié par une résine.

3. Moteur selon l'une quelconque des revendications 1 et 2, dans lequel l'entrée d'air (34) du dispositif d'insonorisation est munie d'une grille anti-givrage (36) montée sur des extrémités externes des lèvres d'entrée d'air (30, 32).

4. Moteur selon l'une quelconque des revendications 1 à 3, dans lequel le dispositif d'insonorisation comprend en outre un atténuateur acoustique (26, 28) formant une paroi du passage (12) d'alimentation du compresseur en air sur une partie de la longueur de ce passage à partir de son ouverture extérieure (12a).

## Patentansprüche

1. Helikopter-Gasturbinentriebwerk, das mit einer Vorrichtung zur Schalldämpfung ausgestattet ist, wobei das Triebwerk einen Verdichter (10) und einen Durchgang (12) zum Beaufschlagen des Verdichters mit Luft aufweist, der sich an seinem stromaufwärtigen Ende über eine äußere Öffnung (12a) öffnet, welche durch ein Metallgehäuse (14) am Umfang des Triebwerks begrenzt ist, **dadurch gekennzeichnet, dass** die Schalldämpfungsvorrichtung Lufteintrittslippen (30, 32) umfasst, die am Umfang des Triebwerks einen radialen Lufteinlass (34) für den Durchgang (12) zur Luftbeaufschlagung des Verdichters definieren, wobei die Lufteintrittslippen (30, 32) innere Enden für ihr Anschließen an das Metallgehäuse (14) des Triebwerks entlang der äußeren Öffnung (12a) des Durchgangs (12) aufweisen und wenigstens teilweise durch einen Schalldämpfer (40, 42) gebildet sind, der in der Lage ist, durch die Rotation des Verdichters erzeugte Schallfrequenzen zu dämpfen.

2. Triebwerk nach Anspruch 1, bei dem die Lippen (30, 32) der Schalldämpfungsvorrichtung aus faserverstärktem Verbundwerkstoff, der durch ein Harz verdichtet ist, bestehen.

3. Triebwerk nach einem der Ansprüche 1 und 2, bei dem der Lufteinlass (34) der Schalldämpfungsvorrichtung mit einem Vereisungsschutzgitter (36) ausgestattet ist, das an äußeren Enden der Lufteintrittslippen (30, 32) angebracht ist.

4. Triebwerk nach einem der Ansprüche 1 bis 3, bei dem die Schalldämpfungsvorrichtung ferner einen Schalldämpfer (26, 28) umfasst, der eine Wand des Durchgangs (12) zur Luftbeaufschlagung des Verdichters über einen Teil der Länge dieses Durchgangs ab dessen äußerer Öffnung (12a) bildet.

## Claims

1. Helicopter gas turbine engine comprising a silencing device, the engine having a compressor (10) and a compressor air supply passage (12) opening at an upstream end through an outer opening (12a) delimited by a metallic casing (14) of the engine, the silencing device comprising air intake lips (30, 32) which define an air intake (34) for the compressor air supply passage, which have inner ends (30b, 32b) for connection to the metallic casing along the passage outer opening (12a) and which are at least partially formed by a sound attenuator (40, 42) calculated to attenuate sound frequencies produced by the compressor rotation.

2. Engine according to Claim 1, in which the lips (30, 32) of the silencing device are made of a composite material with fibrous reinforcing densified by a resin.

3. Engine according to Claim 1, in which the radial air intake (34) of the silencing device is provided with an iceguard (36) mounted on outer ends of the lips (30, 32).

4. Engine according to Claim 1, in which the silencing device also comprises a sound attenuator (26, 28) forming a wall of the compressor air supply passage (12) on a portion of the length of said passage starting from the outer opening (12a) thereof.
